# EUROPÄISCHE PATENTSCHRIFT

(11) **EP 1 263 617 B1**
(45) Veröffentlichungstag und Bekanntmachung des Hinweises auf die Patenterteilung: **17.09.2008**
(21) Anmeldenummer: 01919205.3
(22) Anmeldetag: 16.03.2001
(51) Int. Cl.: B60G 21/055

(54) **GETEILTER STABILISATOR MIT OPTIMIERTER FEDERRATE**
DIVIDED STABILISER HAVING AN OPTIMISED SPRING RATE
STABILISATEUR EN DEUX PIECES A RAIDEUR OPTIMISEE

(30) Priorität: 16.03.2000 DE 10012915
(43) Veröffentlichungstag der Anmeldung: 11.12.2002
(73) Patentinhaber: ZF Lemförder Metallwaren AG, 49448 Lemförde (DE)
(72) Erfinder: REICHEL, Klaus, 19374 Domsühl (DE); KRÜGER, Winfried, 19370 Parchim (DE); BEETZ, Stefan, 55743 Idar-Oberstein (DE); KLASEN, Christian, 19063 Schwerin (DE)
(86) Internationale Anmeldenummer: PCT/DE2001/001023
(87) Internationale Veröffentlichungsnummer: WO 2001/068390

(56) Entgegenhaltungen:
- EP-A- 0 949 421
- EP-A- 1 093 942
- DE-B- 1 179 124
- DE-C- 19 742 882
- GB-A- 895 095
- GB-A- 2 275 661
- US-A- 4 919 444
- US-A- 5 632 502
- US-A- 5 700 027
- US-A- 5 791 444

## Beschreibung

Die Erfindung bezieht sich auf einen geteilten Stabilisator nach den Merkmalen des Oberbegriffs des Anspruchs 1. Eie solcher Stabilisator wird in US-A-4919444 offenbart. Solche Stabilisatoren werden insbesondere in der Fahrzeugtechnik eingesetzt.

Grundsätzlich ist jeder Achse eines Kraftfahrzeuges ein Stabilisator zugeordnet, der nach dem Drehstabprinzip arbeitet und der parallel zur Fahrzeugachse angeordnet und an beiden Enden an einer Radaufhängung befestigt ist. Dieser Stabilisator verhindert bzw. schwächt die Übertragung der von den Fahrbahnverhältnissen verursachten und von den Rädern ausgehenden Wankbewegungen auf das Fahrzeug wesentlich ab. Solche Wankbewegungen treten insbesondere in Fahrbahnkurven oder bei unebenen Fahrbahnverhältnissen auf.
Einteilige Stabilisatoren sind in ihrer Dimensionierung und in ihrer Materialbeschaffenheit auf eine vorbestimmte Federrate ausgelegt, sodass sie Torsionskräfte nur in einer bestimmten Größenordnung aufnehmen und entsprechende Gegenkräfte aufbringen können. Einteilige Stabilisatoren reagieren daher auf unterschiedliche Belastungen entweder zu weich oder zu hart, was sich nachteilig auf den Fahrkomfort auswirkt. Daher sind einteilige Stabilisatoren für Kraftfahrzeuge, die sowohl für den Einsatz auf der Straße als auch im Gelände vorgesehen sind, grundsätzlich nur bedingt geeignet. In Fahrzeugen für die Straße und für das Gelände wird daher ein geteilter Stabilisator eingesetzt, dessen beide Stabilisatorteile über einen Aktuator miteinander verbunden sind.
Ein solcher Aktuator kann beispielsweise ein hydraulischer Schwenkmotor sein, wie er in der DE 197 42 882 C1 des Anmelders beschrieben ist, oder er kann auch eine elastische Drehkupplung sein, wie sie aus der DE 43 42 360 C2 bekannt ist.
Ein anderer Aktuator ist aus der DE 199 23 100 C1 des Anmelders bekannt, der als eine schaltbare Kupplung ausgeführt ist und der dazu ein Kupplungsstück besitzt, das beide Stabilisatorteile formschließend miteinander verbindet.

Ein jeder dieser Aktuatoren besteht grundsätzlich aus einem äußeren Drehteil, der über einen Deckel und einen Flansch mit einem der beiden Stabilisatorteile verbunden ist und einem inneren Drehteil, der über eine Welle mit dem anderen Stabilisatorteil Verbindung hat. Beide Drehteile sind in einem begrenzten Winkel gegeneinander drehbar ausgeführt. Als Verbindungsteile zwischen dem Flansch und dem einen Stabilisatorteil sowie zwischen der Welle und dem anderen Stabilisatorteil kommen in der Regel herkömmliche Klemm- oder Schraubbuchsen zur Anwendung. Solche geteilten Stabilisatoren werden den unterschiedlichsten Anforderungen gerecht. Sie haben aber einen wesentlichen Nachteil. So stellt jeder Aktuator eine Kompakteinheit mit einer beträchtlichen Längenausdehnung dar, die im entsprechenden Umfang zu Lasten der wirksamen federnden Längen der beiden Stabilisatorteile geht.
Dadurch rufen gleiche Federwege höhere Torsionsspannungen in den beiden Stabilisatorteilen hervor, was gleichzeitig höhere Federraten erfordert. Die höheren Federraten führen zu einem Qualitätsverlust und Senkung des Fahrkomforts.
Es besteht daher die Aufgabe, die wirksamen federnden Längen der beiden Stabilisatorteile eines geteilten Stabilisators der vorliegenden Art optimal zu erhöhen.

Diese Aufgabe wird durch die kennzeichnenden Merkmale des Anspruchs 1 gelöst. Zweckdienliche Ausgestaltungen ergeben sich aus den Ansprüchen 2 und 3.

Die Erfindung beseitigt die genannten Nachteile des Standes der Technik.

Die Erfindung soll nachstehend an zwei Ausführungsbeispielen näher erläutert werden.

Dazu zeigen
- Fig. 1:: einen Aktuator in der Ausführung eines hydraulischen Schwenkmotors,
- Fig. 2:: einen Aktuator in der Ausführung einer drehbaren Schaltkupp lung im Schnitt entlang der Ebene AA aus der Fig. 3,
- Fig. 3:: eine andere Schnittebene der drehbaren Schaltkupplung und
- Fig. 4:: eine perspektivische Teilansicht wesentlicher Bauteile der drehbaren Schaltkupplung.

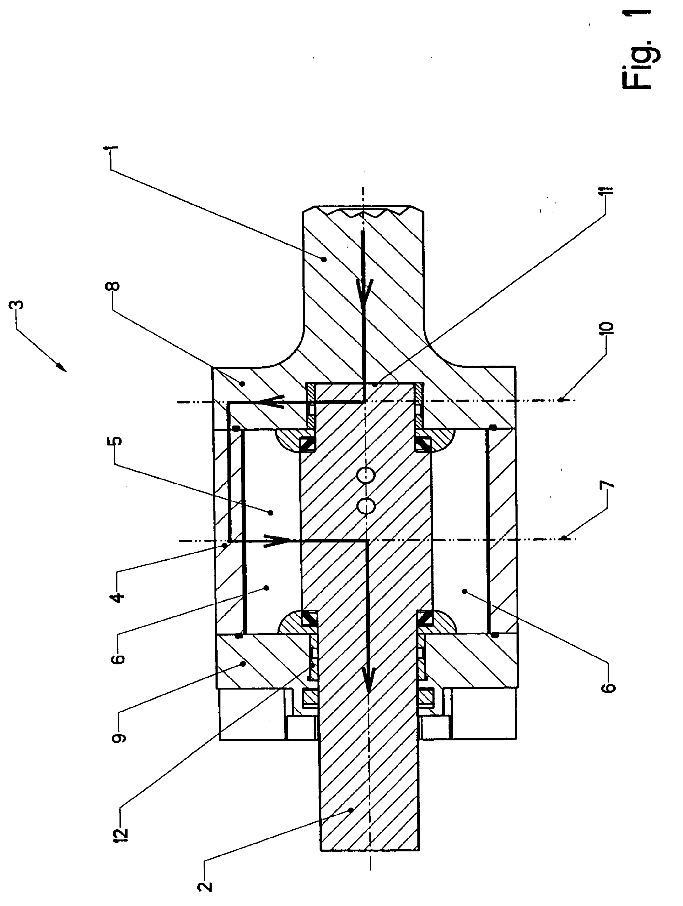

In einem ersten Ausführungsbeispiel gemäß der Fig. 1 besteht ein geteilter Stabilisator aus einem ersten Stabilisatorteil 1 und einem zweiten Stabilisatorteil 2, die beide über einen hydraulischen Schwenkmotor 3 verbunden sind. Sowohl die beiden Stabilisatorteile 1 und 2 als auch der hydraulische Schwenkmotor 3 sind auf einer gemeinsamen Achse angeordnet. Dabei besteht der Schwenkmotor 3 aus einem äußeren Drehteil 4 und einem inneren Drehteil 5, wobei der äußere Drehteil 4 mindestens einen äußeren, nicht dargestellte Drehflügel besitzt, der jeweils über eine bestimmte drehmomentübertragende axiale Länge x fest mit dem äußeren Drehteil 4 verbunden ist und der radial nach innen gerichtet ist. Das innere Drehteil 5 besitzt mindestens einen inneren Drehflügel 6, der ebenfalls über die gleiche drehmomentübertragende axiale Länge x mit dem inneren Drehteil 5 fest verbunden ist und der radial nach außen gerichtet ist. Dabei sind der äußere Drehflügel und der innere Drehflügel 6 in ihrer Gestaltung so ausgeführt, dass sie zwischen sich mindestens zwei Freiräume ausbilden. Im Bereich dieser Freiräume sind die äußeren Drehflügel und die inneren Drehflügel 6 gegeneinander frei drehbar, bis sie auf gegenseitigen Anschlag zu liegen kommen.

Die Art und damit die kraftübertragende axiale Länge x der jeweiligen Befestigung zwischen dem äußeren Drehteil 4 und dem äußeren Drehflügel bzw. zwischen dem inneren Drehteil 5 und dem inneren Drehflügel 6 werden durch das zu übertragende Drehmoment bestimmt.
Dagegen ergibt sich die Größe des äußeren Drehflügels und des inneren Drehflügels 6 aus dem durch den hydraulischen Schwenkmotor 3 zu erzeugendem Drehmoment. Dieser Größe des äußeren und des inneren Drehflügels 6 liegt somit eine drehmomenterzeugende axiale Länge zu Grunde, die in diesem Ausführungsbeispiel der drehmomentübertragenden Länge entspricht. Es ist aber auch möglich, dass die drehmomentübertragende Länge der beiden Drehflügel 6 kleiner als ihre drehmomenterzeugende Länge ist.
Die äußeren Drehflügel und die inneren Drehflügel 6 liegen also auf einer gemeinsamen ersten radialen Kraftübertragungsebene 7 zum Kraftübertrag von der Achse des zweiten Stabilisatorteiles 2 zum äußeren Drehteil 4 und zurück. Diese erste radiale Kraftübertragungsebene 7 ist zur besseren Veranschaulichung als eine Strich-Punkt-Linie dargestellt.

Der äußere Drehteil 4 mit seinem äußeren Drehflügel und der innere Drehteil 5 mit seinem inneren Drehflügel 6 finden durch einen Deckelflansch 8 einerseits und einen Lagerdeckel 9 andererseits einen axialen Abschluss, sodass sich die Freiräume zwischen den äußeren und inneren Drehflügel 6 als Druckräume ausgebildet. Diese Druckräume sind in entsprechender Weise nach außen und nach innen abgedichtet und mit einer hydraulischen Anlage verbunden.

Der Deckelflansch 8 ist in besonderer Weise einteilig mit dem ersten Stabilisatorteil 1 einteilig ausgeformt und besitzt daher einerseits eine Form und entsprechende Ab-messungen, die eine Deckelfunktion am hydraulischen Schwenkmotor 3 und andererseits eine drehmomentübertragende Funktion ermöglicht. Dabei wird die drehmomentübertragende Funktion maßgeblich von der axialen Länge des Deckelflansches 8 bestimmt, die somit eine weitere kraftübertragende Länge y, nämlich zum Kraftübertrag vom ersten Stabilisatorteil 1 auf das äußere Drehteil 4 und zurück darstellt. Über den Bereich dieser drehmomentübertragenden Länge des Deckelflansches 8 ergibt sich somit eine zweite radiale Kraftübertragungsebene 10 für den Kraftübertrag von der Achse des ersten Stabilisatorteiles 1 in das äußere Drehteil 4 und zurück. Diese zweite radiale Kraftübertragungsebene 10 ist wiederum mit einer Strich-Punkt-Linie vereinfacht dargestellt.

Auf seiner Innenseite ist der Deckelflansch 8 mit einer endlichen Lagerbohrung 11 zur Aufnahme des zweiten Stabilisierungsteiles 2 mit seinem inneren Drehteil 5 ausgestattet. Der auf der gegenüberliegenden Seite des hydraulischen Schwenkmotors 3 befindliche Lagerdeckel 9 ist in herkömmlicher Weise ausgebildet und besitzt daher auch eine durchgehende Lagerbohrung 12 zur Aufnahme des inneren Drehteiles 5. Sowohl der Lagerdeckel 9 als auch der Deckelflansch 8 sind über nicht dargestellte Schrauben bzw. durch eine Schweißverbindung am äußeren Drehteil 4 befestigt. Das innere Drehteil 5 ist nun in besonderer Weise einteilig mit dem zweiten Stabilisatorteil 2 ausgeformt und im Lagerdeckel 9 und dem Deckelflansch 8 gelagert. Dazu besitzt der innere Drehteil 5 bis über den Bereich der ersten radialen Kraftübertragungsebene 7 Abmessungen, die weitestgehend mit den Abmessungen des zweiten Stabilisatorteiles 2 übereinstimmen. Die inneren Drehflügel 6 sind auf dem inneren Drehteil 5 in herkömmlicher Weise durch eine Verzahnung, durch eine Verklemmung oder dgl. befestigt.

Bei einer entsprechenden und unterschiedlichen Belastung der beiden Stabilisatorteile 1, 2 ergibt sich ein Kraftfluss, der sich in der eingezeichneten Pfeilrichtung einerseits, z.B. innerhalb des ersten Stabilisatorteiles 1 und in axialer Richtung bis zur zweiten radialen Kraftübertragungsebene 10 erstreckt, sich auf dieser radialen Kraftübertragungsebene 10 bis in Höhe des äußeren Drehteiles 4 ausdehnt, sich weiterhin innerhalb des äußeren Drehteiles 4 axial bis zur ersten radialen Kraftübertragungsebene 7 fortpflanzt und der sich auf dieser ersten Kraftübertragungsebene 7 bis zum inneren Drehteil 5 und von dort axial innerhalb des zweiten Stabilisatorteiles 2 ausweitet.

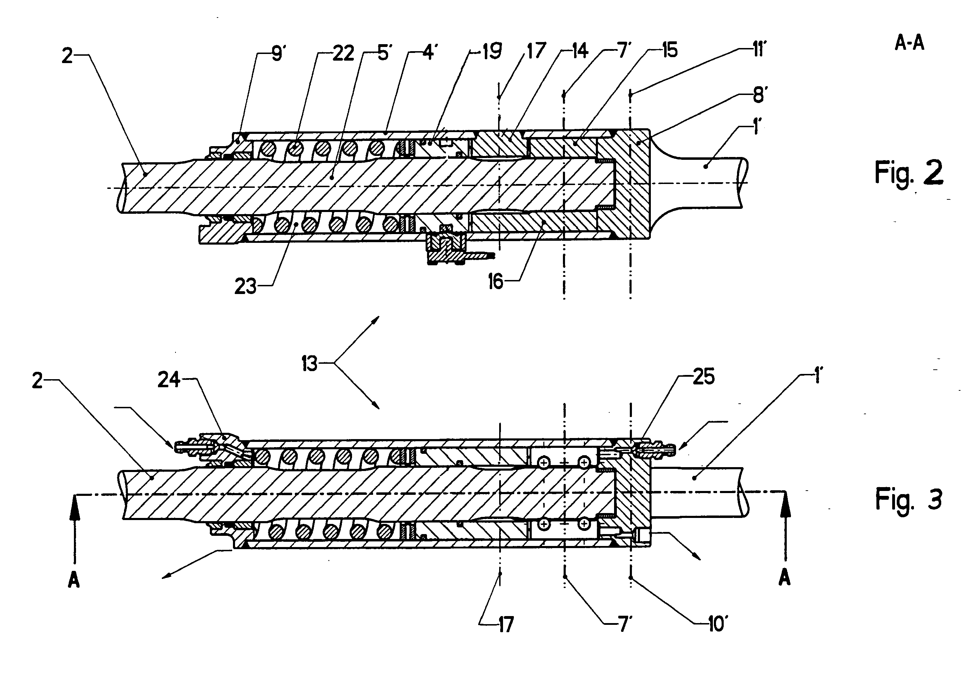

In einem zweiten Ausführungsbeispiel gemäß den Fig. 2 bis 4 besteht ein geteilter Stabilisator ebenfalls aus einem ersten Stabilisatorteil 1' und einem zweiten Stabilisatorteil 2', die beide in dieser Ausführung aber mit einer drehbaren Schaltkupplung 13 verbunden sind.
Auch die Schaltkupplung 13 besitzt ein äußeres Drehteil 4' in der Gestalt eines zylindrischen Gehäuses, der zu einer Stirnseite über einen Deckelflansch 8' abgedeckt und drehfest mit dem ersten Stabilisatorteil 1' verbunden ist. Dabei wird der Deckelflansch 8' mit einer kraftübertragenden axialen Länge y ausgeführt, die auf der zweiten Kraftübertragungsebene 10' liegt.
Der äußere Drehteil 4' ist zur anderen Stirnseite mit dem Lagerdeckel 9' begrenzt und mit einem feststehenden äußeren Drehflügel 14 ausgerüstet, der nach innen gerichtet ist. Dieser Drehflügel 14 befindet sich an einer vorbestimmten und an anderer Stelle noch näher bezeichneten Position.
Die drehbare Schaltkupplung 13 besitzt auch ein inneres Drehteil 5', der einstückig mit dem zweiten Stabilisatorteil 2' ausgebildet ist. Dieses innere Drehteil 5' ist einerseits im Lagerdeckel 9' und anderseits im Deckelflansch 8' gelagert. Im Bereich der Lagerung im Deckelflansch 8' ist das innere Drehteil 5' mit einer Verzahnung ausgerüstet, auf der ein zweiteiliges Kraftübertragungselement 15 drehfest aufgesetzt ist. Das Kraftübertragungselement 15 dehnt sich über eine bestimmte wirksame kraftübertragende Länge x aus und zeichnet so die erste radiale Kraftübertragungsebene 7' zwischen dem inneren Drehteil 5' und dem Kraftübertragungselement 15. Das Kraftübertragungselement 15 ist weiterhin auf der zum Lagerdeckel 9' zeigenden Stirnseite mit einem, radial zum inneren Drehteil 5' angeordneten inneren Drehflügel 16 ausgestattet, der so angeordnet ist, dass er sich auf einer radialen Ebene mit dem äußeren Drehflügel 14 des äußeren Drehteiles 4' befindet. Beide Drehflügel 14 und 16 erstrecken sich wieder über eine bestimmte axiale kraftübertragende Länge und zeichnen so eine dritte radiale Kraftübertragungsebene 17 zur Kraftübertragung zwischen dem Kraftübertragungselement 15 und dem äußeren Drehflügel 14 des äußeren Drehteiles 4'.
Der innere Drehflügel 16 und der äußere Drehflügel 14 sind so bemessen und zueinander angeordnet, dass sie zwischen sich zwei radiale und gegenüberliegende Freiräume 18 bilden.
In einer weiteren axialen Ausdehnung in Richtung des Lagerdeckels 9' befindet sich neben der dritten radialen Kraftübertragungsebene 17 ein auf dem inneren Drehteil 5' verschiebbar gelagertes Kupplungsstück 19. Dieses Kupplungsstück 19 besteht aus einem Führungsteil 20 und zwei gleiche und gegenüberliegende Kupplungsteile 21. Dabei sind die beiden Kupplungsteile 21 mit seitlichen und konisch verlaufenden Führungsflächen ausgerüstet und in ihren Abmessungen so ausgelegt, dass sie die beiden Freiräume 18 zwischen den beiden Drehflügeln 14 und 16 spielfrei zu schließen vermögen. Dieses Kupplungsstück 19 wird weiterhin von einer Druckfeder 22 belastet, die sich am Lagerdeckel 9' abstützt und die sich in einem Federraum 23 des Gehäuses befindet. Der Federraum 23 ist zusätzlich als Druckraum ausgebildet und über einen Einlassstutzen 24 mit einer Hydraulikanlage verbunden. Ein so im Federraum 23 aufzubauender Hydraulikdruck unterstützt die Kraft der Druckfeder 22. Auf der druckfederabgewandten Seite ist das Kupplungsstück 19 bedarfsweise mit einem der Druckfeder 22 entgegenwirkenden hydraulischen Druck belastbar ausgeführt, wozu sich im Deckelflansch 8' eine entsprechende Einlassöffnung 25 für die Druckflüssigkeit befindet.
Im Gehäuse des äußeren Drehteiles 4' befindet sich ein Sensor 26 zur Positionsbestimmung des beweglichen Kupplungsstückes 19.

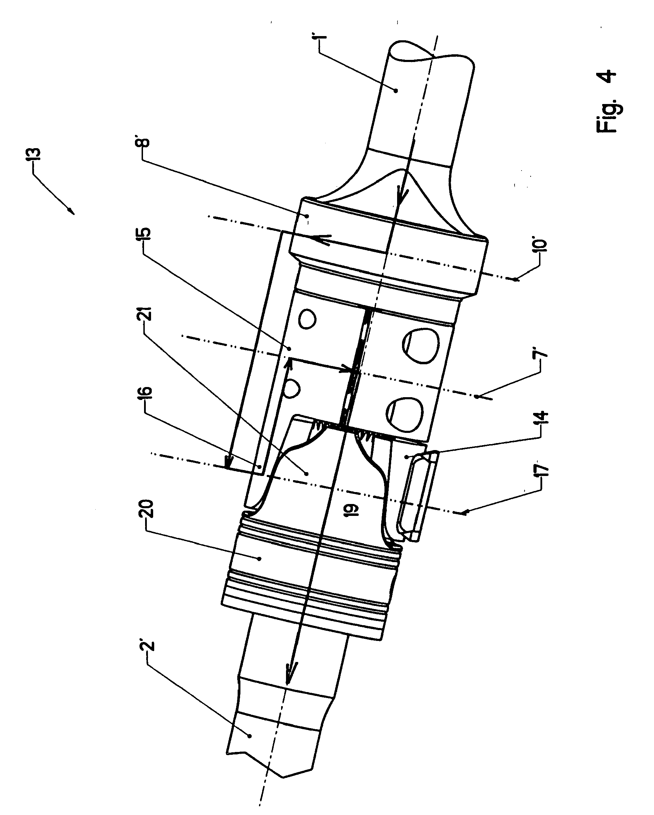

In der Ausgangsstellung ist das Kupplungsstück 19 eingekuppelt, sodass die Kupplungsteile 21 spielfrei in den Freiräumen zwischen den beiden Drehflügeln 14, 16 eingepasst sind.
Bei einer unterschiedlichen Belastung der beiden Stabilisatorteile 1, 2 ergibt sich ein Kraftfluss in der aus der Fig. 4 ersichtlichen Pfeilrichtung einerseits zum Beispiel aus dem Stabilisatorteil 1' in axialer Richtung bis zur zweiten radialen Kraftübertragungsebene 10', auf der zweiten radialen Kraftübertragungsebene 10' bis zum äußeren Drehteil 4' und dort in axialer Richtung bis zur dritten radialen Kraftübertragungsebene 17. Von dort fließt die Kraft axial zurück bis zur ersten radialen Kraftübertragungsebene 7'und dann über die erste radiale Kraftübertragungsebene 7' bis zum inneren Drehteil 5', von wo es sich in axialer Richtung innerhalb des zweiten Stabilisatorteiles 2' fortpflanzt.
Im entkuppelten Zustand befinden sich die Kupplungsteile 21 mit den Drehflügeln 14, 16 außer Eingriff, sodass bei einer unterschiedlichen Belastung der beiden Stabilisatorteile 1', 2' zunächst für jede Drehrichtung ein freier Drehwinkel überwunden werden muss, ehe die beiden Drehflügel 14, 16 direkt zur Anlage kommen. Die Kraft fließt dann in gleicher Weise wie im gekuppelten Zustand.

### Aufstellung der Bezugszeichen

- 1, 1': erster Stabilisatorteil
- 2, 2': zweiter Stabilisatorteil
- 3: hydraulischer Schwenkmotor
- 4, 4': äußeres Drehteil
- 5, 5': inneres Drehteil
- 6: innerer Drehflügel
- 7, 7': erste radiale Kraftübertragungsebene
- 8, 8': Deckelflansch
- 9, 9': Lagerdeckel
- 10, 10': zweite radiale Kraftübertragungsebene
- 11, 11': endliche Lagerbohrung
- 12: durchgehende Lagerbohrung
- 13: drehbare Schaltkupplung
- 14: äußerer Drehflügel
- 15: Kraftübertragungselement
- 16: innerer Drehflügel
- 17: dritte radiale Kraftübertragungsebene
- 18: Freiraum
- 19: Kupplungsstück
- 20: Führungsteil
- 21: Kupplungsteil
- 22: Druckfeder
- 23: Federraum
- 24: Einlassstutzen
- 25: Einlassöffnung
- 26: Sensor

## Patentansprüche

1. Geteilter Stabilisator mit optimierter Federrate, bestehend aus einem ersten Stabilisatorteil (1') und einem zweiten Stabilisatorteil (2'), die beide durch eine Schaltkupplung (13) miteinander verbunden sind, wobei die Schaltkupplung (13) aus einem äußeren Drehteil (4') mit radial nach innen gerichteten Drehflügel (14) und einem inneren Drehteil (5') mit radial nach außen gerichteten Drehflügeln (16) besteht, die begrenzt zueinander drehbar sind, wobei zwischen den nach innen gerichteten Drehflügeln (14) und den nach außen gerichteten Drehflügeln (16) Freiräume (18) für ein Kupplungsstück (19) bestehen und der äußere Drehteil (4') mit dem ersten Stabilisatorteil (1') über eine zweite radiale Kraftübertragungsebene (10') und der innere Drehteil (5') mit dem zweiten Stabilisatorteil (2') über eine erste Kraftübertragungsebene (7') verbunden sind, wobei
- der erste Stabilisatorteil (1') mit dem Verschlussdeckel (8') des äußeren Drehteils (4') einteilig ausgeformt ist und sich mit seinen federratenbestimmenden Abmessungen bis in die zweite radiale Kraftübertragungsebene (10') erstreckt und
- der zweite Stabilisatorteil (2') mit dem inneren Drehteil (5') einteilig ausgeformt ist und sich mit seinen federratenbestimmenden Abmessungen bis in die erste radiale Kraftübertragungsebene (7') erstreckt,
**dadurch gekennzeichnet, dass**
- jeder der beiden radialen Kraftübertragungsebenen (7', 10') eine kraftübertragende axiale Länge (x, y) zugeordnet ist und beide kraftübertragenden Längen (x, y) unmittelbar benachbart angeordnet sind und
- der nach außen gerichtete Drehflügel (16) des inneren Drehteiles (5') und der nach innen gerichtete Drehflügel (14) des äußeren Drehteiles (4') eine dritte radiale Kraftübertragungsebene (17) bilden und die dritte radiale Kraftübertragungsebene (17) sich auf der dem Stabilisatorteil (2') zugewandten Seite der ersten radialen Kraftübertragungsebene (7') befindet.

2. Geteilter Stabilisator nach Anspruch 1,
**dadurch gekennzeichnet, dass** die erste radiale Kraftübertragungsebene (7') durch ein drehfest mit dem inneren Drehteil (5') verbundenes Kraftübertragungselement (15) gebildet wird, das einteilig mit dem inneren Drehflügel (16) verbunden ist.

## Claims

1. Divided stabiliser with optimised spring rate, consisting of a first stabiliser part (1') and a second stabiliser part (2') which are connected to one another by a switchable coupling (13), the switchable coupling (13) consisting of an outer rotary part (4') with radially inwardly-oriented rotary vanes (14) and an inner rotary part (5') with radially outwardly-oriented rotary vanes (16), which rotary vanes (14, 16) are rotatable by a limited amount with respect to one another, free cavities (18) for a coupling piece (19) being present between the inwardly-oriented rotary vanes (14) and the outwardly-oriented rotary vanes (16) and the outer rotary part (4') being connected to the first stabiliser part (1') via a second radial force-transmission plane (10') and the inner rotary part (5') being connected to the second stabiliser part (2') via a first force-transmission plane (7'), wherein
- the first stabiliser part (1') is formed in one piece with the sealing cover (8') of the outer rotary part (4') and extends with its spring-rate determining dimensions into the second radial force-transmission plane (10'), and
- the second stabiliser part (2') is formed in one piece with the inner rotary part (5') and extends with its spring-rate determining dimensions into the first radial force-transmission plane (7'),
**characterised in that**
- a respective force-transmitting axial length (x, y) is associated with each of the two radial force-transmission planes (7', 10') and both force-transmitting lengths (x, y) are arranged immediately adjacent to one another, and
- the outwardly-oriented rotary vane (16) of the inner rotary part (5') and the inwardly-oriented rotary vane (14) of the outer rotary part (4') form a third radial force-transmission plane (17) and the third radial force-transmission plane (17) is located on the side of the first radial force-transmission plane (7') oriented towards the stabiliser part (2').

2. Divided stabiliser according to Claim 1, **characterised in that** the first radial force-transmission plane (7') is formed by a force-transmitting element (15) connected non-rotatably to the inner rotary part (5') and connected integrally to the inner rotary vane (16).

## Revendications

1. Stabilisateur en plusieurs parties à raideur optimisée, comportant une première partie de stabilisateur (1') et une deuxième partie de stabilisateur (2'), qui sont toutes deux reliées l'une à l'autre par l'intermédiaire d'un accouplement débrayable (13), l'accouplement débrayable (13) étant composé d'une pièce de rotation extérieure (4') ayant des ailettes de rotation (14) dirigées radialement vers l'intérieur, et d'une pièce de rotation intérieure (5') ayant des ailettes de rotation (16) dirigées radialement vers l'extérieur, entraînables en une rotation relative limitée, l'une par rapport à l'autre, des espaces libres (18) pour un élément d'accouplement (19) étant créés entre les ailettes (14) dirigées radialement vers l'intérieur et les ailettes (16) dirigées radialement vers l'extérieur, et la pièce de rotation extérieure (4') étant reliée à la première partie de stabilisateur (1') via un deuxième plan radial de transmission des forces (10'), et la pièce de rotation intérieure (5') étant reliée à la deuxième partie de stabilisateur (2') via un premier plan de transmission des forces (7'),
- la première partie de stabilisateur (1') étant formée d'un seul tenant avec le couvercle de fermeture (8') de la pièce de rotation extérieure (4') et s'étendant, pour ce qui est de ses dimensions déterminantes pour la raideur, jusqu'à l'intérieur du deuxième plan radial de transmission des forces (10'), et
- la deuxième partie de stabilisateur (2') étant formée d'un seul tenant avec la pièce de rotation intérieure (5') et s'étendant, pour ce qui est de ses dimensions déterminantes pour la raideur, jusqu'à l'intérieur du premier plan radial de transmission des forces (7'),
**caractérisé en ce que**
- chacun des deux plans radiaux de transmission des forces (7', 10') est associé à une longueur axiale (x, y) de transmission des forces, et les deux longueurs (x, y) de transmission des forces sont agencées de façon immédiatement contiguë, et que
- l'ailette de rotation (16) de la pièce de rotation intérieure (5') dirigée vers l'extérieur et l'ailette de rotation (14) de la pièce de rotation extérieure (4') dirigée vers l'intérieur forment un troisième plan radial de transmission des forces (17), et le troisième plan radial de transmission des forces (17) se situe du côté du premier plan radial de transmission des forces (7'), qui est tourné vers la partie de stabilisateur (2').

2. Stabilisateur en plusieurs parties selon la revendication 1,
**caractérisé en ce que**
le premier plan radial de transmission des forces (7') est constitué par un élément de transmission des forces (15) solidaire en rotation de la pièce de rotation intérieure (5'), ledit élément étant venu de matière avec l'ailette de rotation intérieure (16).
